# FASCICULE DE BREVET EUROPEEN

(11) **EP 4 031 413 B1**
(45) Date de publication et mention de la délivrance du brevet: **05.03.2025**
(21) Numéro de dépôt: 20775698.2
(22) Date de dépôt: 31.08.2020
(51) Int. Cl.: B60Q 1/10, B60Q 1/14, F21S 41/143, F21S 41/153, F21S 41/20, F21S 41/63, F21S 41/663

(54) **PROJECTEUR DE VÉHICULE**
FAHRZEUGSCHEINWERFER
VEHICLE HEADLAMP

(30) Priorité: 17.09.2019 FR 1910236; 17.09.2019 FR 1910235
(43) Date de publication de la demande: 27.07.2022
(73) Titulaire: Stellantis Auto SAS, 78300 Poissy (FR)
(72) Inventeur: GONCALVES, Whilk Marcelino, 75013 PARIS (FR); COLLOT, Mathieu, 92140 CLAMART (FR); EL KHADRI, Safouane, 33600 PESSAC (FR); MOLTO, Valerie, 78000 VERSAILLES (FR); POILANE, Philippe, 92160 ANTONY (FR)
(74) Mandataire: ESIP
(86) Numéro de dépôt international: PCT/FR2020/051516
(87) Numéro de publication internationale: WO 2021/053281

(56) Documents cités:
- CN-A- 108 016 348
- DE-A1- 19 730 413
- DE-A1- 4 435 446

## Description

### DOMAINE TECHNIQUE

La présente invention concerne de manière générale le domaine des projecteurs de véhicules, notamment de véhicules automobiles, et en particulier le domaine des projecteurs avant comprenant deux sources d'éclairages, l'une générant un faisceau de route et l'autre un faisceau de croisement.

### ART ANTÉRIEUR

Les projecteurs ou phares avant de véhicules comprennent généralement des moyens de réglage agencés pour assurer un réglage de l'azimut et du site du module optique. Le site correspond à l'assiette ou à l'inclinaison dans le plan vertical du module optique. De tels moyens de réglage sont décrits par exemple dans les documents FR3032513A et FR3026688A qui, en particulier, font référence à des projecteurs sans glace. Dans un tel projecteur, la face avant du module optique est délimitée par une lentille extérieure, ce qui apporte l'avantage de réduire l'absorption d'une partie de la lumière (jusqu'à 10%) par le matériau qui constituerait la glace.

Le réglage du site du faisceau de projection peut dépendre par exemple du chargement transporté à l'arrière du véhicule, chargement qui fait lever l'avant du véhicule et qui typiquement doit être compensé par un tel réglage. Des systèmes plus sophistiqués permettent en outre, lors du roulage du véhicule, un réglage dynamique de façon à ce que le faisceau ne soit jamais éblouissant pour les usagers de la route venant en sens inverse. Ces systèmes sont généralement configurés pour garder une inclinaison constante du faisceau dans le plan vertical par rapport à une ligne horizontale de référence. Le document FR3015003A décrit un projecteur de véhicule automobile dépourvu de glace et comportant deux modules d'éclairage équipés d'un réglage en site.

Le document FR2745061A décrit un projecteur de véhicule automobile permettant de façon simple et économique d'engendrer deux faisceaux lumineux, l'un pour une fonction de croisement et l'autre pour une fonction de route, à partir d'une seule source et d'un miroir.

De façon plus récente, il existe encore des faisceaux d'éclairage matriciel, constitués d'une matrice de diodes électroluminescentes (LED) disposées sur un support plan, tel qu'un circuit imprimé par exemple. Ces LEDs peuvent être réparties en bandes verticales (parfois appelé "matrix beam" en anglais) où chaque bande possède un fonctionnement indépendant des autres bandes. En variante, ces LEDs peuvent être réparties en pixels ("pixel light" en anglais) où chaque LED peut être allumée ou éteinte de manière indépendante.

Ces éclairages matriciels sont désignés comme étant des éclairages adaptatifs, connus sous l'acronyme ADB pour "Adaptive Driving Beam" en anglais, du fait qu'ils permettent d'optimiser l'éclairage de la route sans éblouir le véhicule ou l'usager venant en sens inverse. En effet, dans ces types d'éclairage destinés principalement au faisceau de route, des zones d'éclairage indépendantes les unes des autres ont été créées au sein du même faisceau, de façon à pouvoir activer ou éteindre ces zones selon les besoins. La gestion de l'activation des LEDs, associées à ces secteurs ou zones d'éclairage, peut typiquement être commandée par une unité électronique couplée à un moyen de détection de la localisation d'une cible à ne pas éblouir au sein du faisceau lumineux de route. Un tel moyen de détection peut être une caméra infrarouge par exemple.

Un module d'éclairage de type ADB ("matrix" ou "pixel") rend les mouvements mécaniques nécessaires au réglage en site techniquement complexes. Pour cette raison, les projecteurs pourvus d'un module ABD, pour le faisceau de route, et d'un module standard, pour le faisceau de croisement, ne proposent des réglages en site que sur le module standard associé au feu de croisement. Le module ABD demeure donc un module fixe, à savoir immobile.

Le principal inconvénient de ces projecteurs réside dans le fait que si seul un des deux modules peut être réglé en site, une zone d'ombre située entre les faisceaux de route et de croisement peut parfois survenir et devenir gênante pour le conducteur.

Par conséquent, il existe un intérêt de trouver une solution efficiente et plus adéquate qui, tout en demeurant économique, permette au moins en partie de résoudre l'inconvénient précité. CN108016348 divulgue un projecteur selon le préambule de la revendication 1.

### RÉSUMÉ DE L'INVENTION

Dans ce but, la présente invention porte dans un premier aspect sur un projecteur de véhicule, configuré pour générer une zone d'éclairage au devant du véhicule et comprenant :
- une première source d'éclairage matriciel fixe configurée pour émettre un faisceau lumineux de route,
- une seconde source d'éclairage mobile configurée pour émettre un faisceau lumineux de croisement, et
- un mécanisme de correction configuré pour maintenir une inclinaison verticale constante du faisceau lumineux de croisement par rapport à une ligne horizontale de référence, lorsque le véhicule est en roulage.

Selon l'invention, le projecteur de véhicule comprend en outre un prisme dioptrique configuré pour supprimer au moins une zone d'ombre pouvant survenir, au niveau de ladite zone d'éclairage, entre le faisceau lumineux de route et le faisceau lumineux de croisement.

Avantageusement, le projecteur de la présente invention permet d'améliorer le confort et la sécurité du conducteur du véhicule en conduite nocturne tout en proposant une solution simple et économique aux projecteurs dotés d'une architecture à deux faisceaux dont l'un constitue une source d'éclairage matriciel. En effet, grâce à l'invention, la zone d'ombre ou au moins une partie de cette dernière pouvant survenir entre les faisceaux de route et de croisement, notamment lorsque ce dernier est corrigé en site, peut être supprimée à l'aide d'un moyen optique compensatoire simple, tout en maintenant le module ADB fixe.

Dans un mode de réalisation, le prisme dioptrique est monté mobile, au devant de la première source d'éclairage, entre :
- une position de travail, permettant de réfracter des rayons incidents du faisceau lumineux de route, et
- une position de repos, sans effet sur lesdits rayons incidents ;
et en ce que ledit prisme dioptrique comprend :
- une face d'incidence plane, et
- un dioptre plan duquel lesdits rayons incidents émergent du prisme dioptrique en un faisceau réfracté destiné à projeter, au niveau de la zone d'éclairage, le faisceau lumineux de route de façon adjacente ou partiellement superposée au faisceau lumineux de croisement.

De préférence, le prisme dioptrique comprend un angle, définit par ladite face d'incidence et ledit dioptre plan, configuré pour induire une déviation verticale desdits rayons incidents comprise entre 1 et 4 degrés.

Dans un mode de réalisation, la position de repos est une position escamotée du prisme dioptrique par rapport aux rayons incidents.

Selon un mode de réalisation, le prisme dioptrique est monté mobile en rotation autour d'un axe de rotation situé hors desdits rayons incidents.

Selon un autre mode de réalisation, le prisme dioptrique est monté mobile en translation le long d'un axe de translation.

De préférence, la première source d'éclairage est constituée d'une pluralité de diodes électroluminescentes disposées de façon matricielle sur un support plan et en ce que la face d'incidence du prisme dioptrique est parallèle audit support plan.

Dans un mode de réalisation, une optique primaire, constituée d'une matrice de lentilles convergentes, est agencée au devant dudit support plan et en ce que la face d'incidence du prisme est située dans un plan focal desdites lentilles convergentes.

Dans un mode de réalisation préféré, le prisme dioptrique constitue un organe déviateur activable et/ou désactivable par un signal de commande issu d'un organe de commande configuré pour prévenir ou détecter ladite zone d'ombre.

Dans un second aspect, l'invention porte également sur un véhicule, en particulier un véhicule automobile, comprenant un projecteur selon l'un quelconque des modes de réalisation de ce projecteur ou selon l'une quelconque combinaison possible de ces modes de réalisation.

### BRÈVE DESCRIPTION DES FIGURES

[Fig. 1] est une illustration schématique d'une zone d'éclairage obtenue par une première source d'éclairage matriciel d'un premier type et par une seconde source d'éclairage standard ;
[Fig. 2] est une illustration schématique, semblable à celle de la Fig. 1, dans laquelle la première source d'éclairage matriciel est d'un second type ;
[Fig. 3] est une illustration schématique de la zone d'ombre pouvant survenir entre les faisceaux des première et seconde sources d'éclairage précitées ;
[Fig. 4] est une illustration schématique des principaux éléments d'un projecteur selon la présente invention ;
[Fig. 5] est une illustration schématique, dans une vue de profil, de la première source d'éclairage matriciel fixe selon l'invention ;
[Fig. 6] est une illustration d'un mode de réalisation de l'invention dans une vue similaire à celle de la Fig. 5 ; et
[Fig. 7] est une illustration d'un autre mode de réalisation de l'invention selon une représentation similaire à celle de la Fig. 6.

### DESCRIPTION DÉTAILLÉE

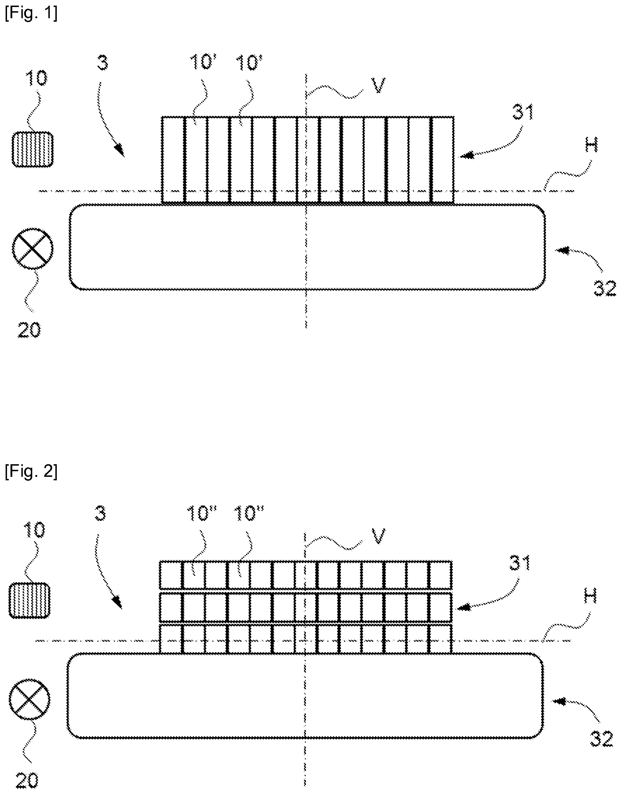

En référence à la Fig. 1, celle-ci représente schématiquement une zone d'éclairage 3 obtenue par une première source 10 d'éclairage matriciel et par une seconde source 20 d'éclairage standard. Plus précisément, la première source 10 produit une première zone d'éclairage 31 et la seconde source 20 produit une seconde zone d'éclairage 32. Dans le présent cas d'espèce, ces première et seconde zones d'éclairage 31, 32 peuvent être qualifiées de zones d'éclairage partielles, car elles ne forment la zone d'éclairage 3 que lorsqu'elles sont considérées ensemble.

Un repère orthonormé formé d'un axe horizontal H et d'un axe vertical V est illustré en superposition de la zone d'éclairage 3. L'éclairage de la première source 10 est de type matriciel et est formé d'une pluralité de bandes verticales d'éclairage 10' alignées de manière adjacente les unes à côté des autres. Chaque bande verticale d'éclairage 10' peut être typiquement obtenue à partir d'une colonne de diodes électroluminescentes (LED) constitutive d'une portion de la première source 10. L'avantage de ce type d'éclairage réside dans le fait que chaque bande verticale d'éclairage 10' peut être allumée ou éteinte de façon indépendante.

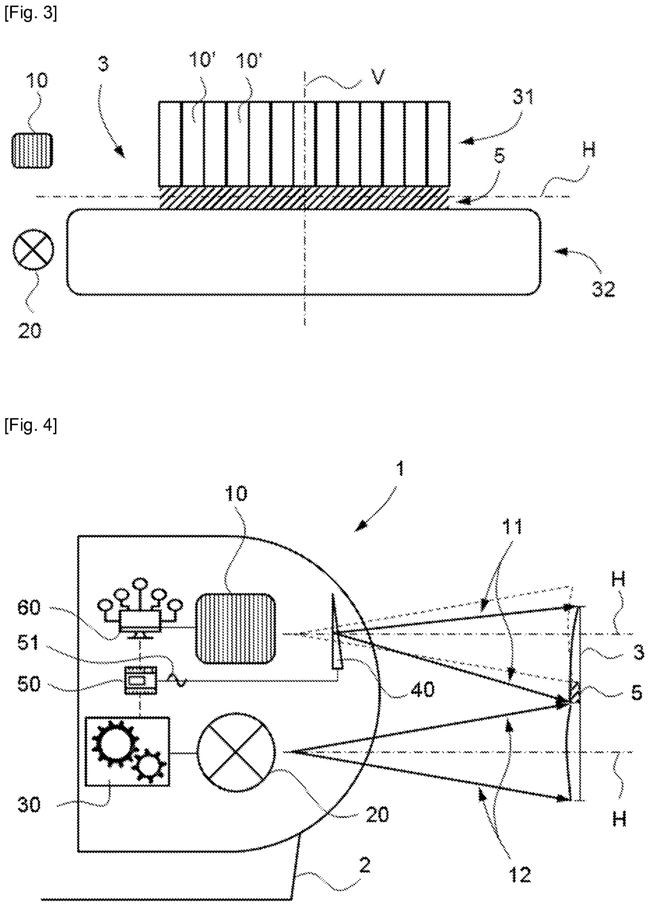

En couplant la première source d'éclairage 10 à un organe de gestion 60 de l'éclairage matriciel (Fig. 4), il devient possible de commander chacune des bandes verticales d'éclairage 10' en fonction des besoins du moment. En particulier, l'association d'une caméra infrarouge ou de tout autre système embarqué de détection (en condition nocturne) d'une cible susceptible d'être éblouie, peut alors être à même de sélectionner les bandes verticales d'éclairage 10' qui, par exemple, doivent être éteintes pour ne pas gêner la cible, notamment lorsqu'il s'agit d'un véhicule ou d'un piéton venant en contre-sens. Cette première source 10 d'éclairage matriciel peut être qualifiée d'adaptative puisqu'elle est capable de générer dynamiquement un faisceau adaptatif ou modulable. Pour cette raison, un tel type d'éclairage est généralement connu sous l'acronyme ADB ("Adaptive Driving Beam").

Si la première source 10 d'éclairage matriciel est typiquement utilisée comme feu de route, la seconde source d'éclairage, plus modeste, est généralement dédiée au feu de croisement. Cette seconde source 20 n'est ordinairement pas de type matriciel mais est plus classiquement constituée d'une ampoule, par exemple d'une ampoule halogène ou au xénon.

Pour améliorer la vision nocturne du conducteur et ne pas éblouir les usagers de la route venant en sens inverse, une mesure additionnelle est encore apportée aux projecteurs de véhicules récents. Cette mesure consiste à corriger dynamiquement l'éclairage en site de la seconde source 20 dédiée aux feux de croisement. Pour mémoire, un tel réglage consiste à faire varier l'angle moyen de projection du faisceau lumineux de croisement dans le plan vertical, de façon à corriger la hauteur de la zone d'éclairage partielle 32 par rapport à une ligne horizontale de référence ou d'axe H. La correction s'opère de façon dynamique, à savoir en tout temps durant le roulage du véhicule. Typiquement, le rayon supérieur du faisceau lumineux de route sera généralement réglé de manière à ce qu'il se trouve à une inclinaison de 0.57° en dessous de la ligne horizontale de référence H. Cette inclinaison correspond à un angle présentant une pente de 1% orientée vers le bas depuis la source.

La Fig. 2 représente une variante de l'illustration donnée à la Fig. 1. En effet, dans la Fig. 2, l'éclairage matriciel de la première source 10 est un éclairage de type "pixel" dans lequel les bandes verticales d'éclairage 10' ont encore été subdivisées par des lignes horizontales de sorte à obtenir une multitude de pixels 10". Chaque pixel 10" peut être constitué d'une diode LED ou d'un groupement d'une pluralité de diodes LED. L'avantage d'une telle source d'éclairage réside dans le fait que la granulométrie de l'éclairage offre un partitionnement plus fin que celui que procure la première source 10 représentée à la Fig. 1.

La Fig. 3 représente schématiquement la principale problématique que présentent les projecteurs pourvus de sources 10, 20 d'éclairage, telles que celles illustrées indifféremment aux Figs. 1 ou 2. Du fait que l'une des deux sources d'éclairage, en particulier la seconde source 20 génératrice du faisceau lumineux de croisement, soit corrigée dynamiquement en site, une zone d'ombre 5 peut parfois apparaitre dans la zone d'éclairage 3, entre les zones d'éclairage partielles 31, 32. Cette zone d'ombre 5 survient en fonction de l'inclinaison ou assiette du véhicule par rapport au profil du terrain et peut constituer une gêne pour le conducteur du véhicule notamment. L'objet de la présente invention vise en particulier à obvier, au moins en partie, à cet inconvénient.

A noter qu'en raison de la complexité du module optique nécessaire à la première source 10 d'éclairage matriciel, cet éclairage est de préférence rendu fixe ou immobile. Par conséquent, la première source 10 générant le faisceau lumineux de route doit être considérée comme ne pouvant pas être inclinée en site, contrairement à la seconde source 20 générant le faisceau lumineux de croisement.

Comme représenté de manière très schématique à la Fig. 4, pour résoudre au moins en partie le problème précité, l'objet de la présente invention propose dans son premier aspect un projecteur 1, de véhicule 2, configuré pour générer une zone d'éclairage 3 au devant du véhicule 2. Ce projecteur ou phare avant de véhicule peut être pourvu d'une glace de protection ou être de préférence dépourvu d'une telle glace.

Le projecteur 1 de la présente invention comprend :
- une première source 10 d'éclairage matriciel fixe configurée pour émettre un faisceau lumineux de route 11,
- une seconde source 20 d'éclairage mobile configurée pour émettre un faisceau lumineux de croisement 12, et
- un mécanisme de correction 30 configuré pour maintenir une inclinaison verticale constante du faisceau lumineux de croisement 12 par rapport à une ligne horizontale H de référence, lorsque le véhicule 2 est en roulage.

Selon l'invention, ce projecteur 1 comprend en outre un prisme 40 dioptrique configuré pour supprimer au moins une zone d'ombre 5 pouvant survenir, au niveau de ladite zone d'éclairage 3, entre le faisceau lumineux de route 11 et le faisceau lumineux de croisement 12.

On relèvera que l'éclairage mobile de la seconde source 20 n'est nullement limité à pouvoir apporter une correction en site, à savoir une correction dans le plan vertical, mais pourrait également être configuré pour pouvoir apporter une correction en azimut, à savoir une correction dans le plan horizontal. Aussi, la correction en site et/ou en azimut est en outre une correction dynamique, c'est-à-dire une correction qui s'effectue, de préférence en permanence, lorsque le véhicule est en roulage. Ainsi, on ne confondra pas une telle correction avec un ajustement occasionnel des optiques conféré par un système de réglage occasionnelle de ces dernières. Un tel ajustement peut par exemple viser à compenser de manière unique ou occasionnelle l'assiette du véhicule en raison de la charge qu'il transporte, ou consister en un ajustage manuel des optiques au moyen de vis de réglage manipulées généralement par un garagiste, lors de contrôles techniques du véhicule par exemple. Enfin, l'inclinaison verticale (à savoir en site) du faisceau lumineux de croisement 12 par rapport à la ligne horizontale V de référence n'est de préférence pas nulle, comme schématiquement illustré à la Fig. 4, mais est plutôt dirigée vers le bas (en dessous de la ligne horizontale H) comme illustré notamment sur les Figs. 1 à 3.

Grâce au prisme dioptrique que comprend le projecteur 1 de la présente invention, la ou les zones d'ombre 5 illustrées aux Figs. 3 et 4 peuvent avantageusement être éliminées, au moins en partie, sans modifier ni la première source 10 d'éclairage matriciel fixe, ni la seconde source 20 d'éclairage mobile. Ainsi, la technologie que requiert la première source d'éclairage matriciel est épargnée de tout dispositif additionnel visant à la rendre mobile ce qui évite une fragilisation ou une complexification de cette première source d'éclairage matriciel. De plus, l'adaptation de projecteurs existants, pourvus de telles première et seconde sources d'éclairage, s'en trouve facilitée par l'adjonction aisée d'un organe déviateur tel que le prisme 40 pour pouvoir obvier à l'inconvénient que constitue la zone d'ombre 5 pour le conducteur du véhicule. De ce fait, l'adaptation de tels projecteurs trouve avantageusement une solution aussi économique qu'efficace.

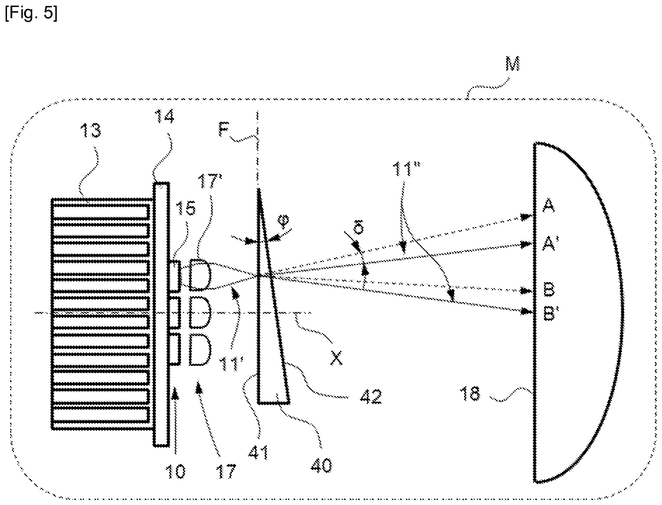

La Fig. 5 est une illustration schématique, dans une vue de profil, de la première source 10 d'éclairage matriciel fixe selon l'invention. On remarque sur cette figure que cette première source 10 fait de préférence partie d'un module optique M comprenant de préférence un radiateur 13 associé à un circuit imprimé sur lequel est disposée une matrice de diodes électroluminescentes 15, d'une optique primaire 17 et d'une optique secondaire 18. Comme illustré sur cette figure, la présence du prisme 40 dioptrique permet de dévier les rayons lumineux A et B dans un plan vertical vers le bas et d'obtenir respectivement les rayons lumineux A' et B' avant de projeter ces derniers vers l'infini au moyen de l'optique secondaire 18. Cette optique secondaire 18 peut être typiquement constituée d'une lentille de projection.

Le caractère dioptrique du prisme 40 lui confère une capacité à pouvoir réfracter la lumière et, de ce fait, à pouvoir dévier le faisceau lumineux de route 11 d'une certaine inclinaison verticale dirigée vers le bas, comme schématiquement illustré à la Fig. 4. Le prisme 40 est de préférence un prisme en verre optique, par exemple en verre crown, ou en polyméthacrylate de méthyle (Plexiglas). Le pouvoir déviateur du prisme dioptrique dépend de l'angle ϕ du prisme et de son indice de réfraction n, plus particulièrement de l'indice de réfraction du matériau qui constitue ce prisme.

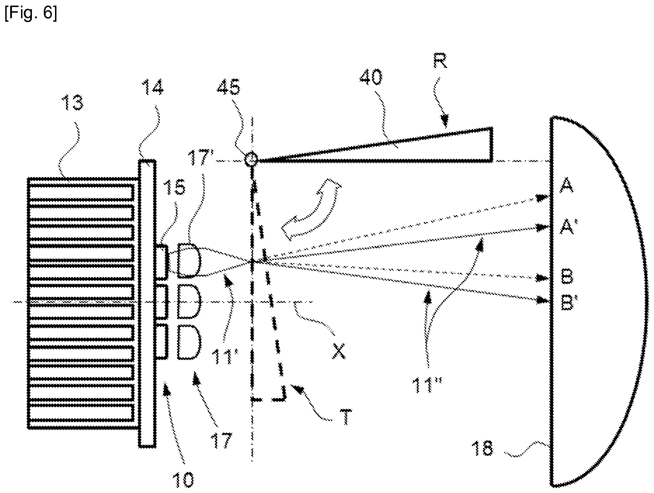

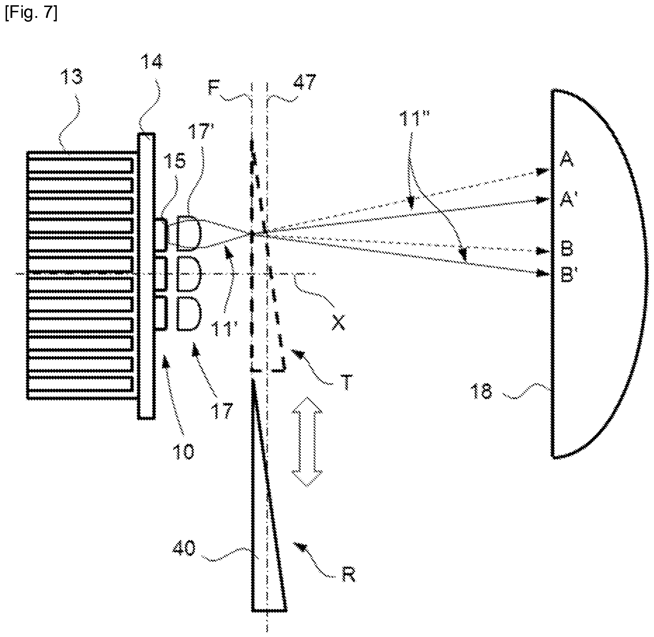

Selon un mode de réalisation préféré de l'invention illustré par les Figs. 6 et 7, le prisme 40 dioptrique est monté mobile, au devant de la première source 10 d'éclairage, entre :
- une position de travail T, permettant de réfracter des rayons incidents 11' du faisceau lumineux de route 11, et
- une position de repos R, sans effet sur ces rayons incidents 11'.

De plus, et comme mieux illustré à la Fig. 5, le prisme 40 dioptrique comprend :
- une face d'incidence 41 plane, et
- un dioptre 42 plan duquel les rayons incidents 11' émergent du prisme 40 dioptrique en un faisceau réfracté 11" destiné à projeter (ou configuré pour projeter), au niveau de la zone d'éclairage 3, le faisceau lumineux de route 11 de façon adjacente ou partiellement superposée au faisceau lumineux de croisement 12.

On comprendra que les rayons incidents 11' sont plus précisément des rayons situés à la source du faisceau lumineux de route 11.

De préférence la face d'incidence 41 est perpendiculaire à l'axe optique X de la première source 10 d'éclairage matriciel. En d'autres termes, les rayons incidents 11' forment un faisceau incident qui, de préférence, est perpendiculaire à la face d'incidence 41 du prisme dioptrique. Le dioptre 42 plan constitue une surface séparant les milieux transparents que sont l'air et le matériau du prisme. Ces milieux sont considérés comme étant homogènes et isotropes.

Comme illustré à la Fig. 5, l'angle ϕ du prisme est définit par la face d'incidence 41 et par le dioptre plan 42. De préférence, l'angle ϕ du prisme est configuré pour induire une déviation verticale δ, à savoir une déviation dans le plan vertical ou en site, des rayons incidents 11'. Cette déviation est de préférence comprise entre 1 et 4 degrés de façon à ce qu'elle présente une pente (dirigée vers le bas) de l'ordre de 2% à 7%. Pour obtenir une telle déviation, l'angle ϕ du prisme pourrait être compris entre 2 et 4.5 degrés et l'indice de réfraction n du prisme 40 pourrait être compris entre 1.49 et 1.90, incluant de ce fait les matériaux tels que le polyméthacrylate de méthyle (Plexiglas) ainsi que toute la gamme de verres optiques.

Dans un mode de réalisation, la position de repos R est une position escamotée du prisme 40 dioptrique par rapport aux rayons incidents 11'.

La Fig. 6 est une illustration schématique d'un mode de réalisation dans lequel le prisme 40 dioptrique est monté mobile en rotation autour d'un axe de rotation 45 situé hors desdits rayons incidents 11'. Avantageusement, ce mode de réalisation est un mode relativement compact qui permettrait de préserver les dimensions existantes du module optique M dédié à la première source 10 d'éclairage.

La Fig. 7 est une illustration schématique d'un autre mode de réalisation dans lequel le prisme 40 dioptrique est monté mobile en translation le long d'un axe de translation 47.

Quelle que soit la manière avec laquelle le prisme 40 est rendu mobile, cette mobilité peut être obtenue aisément à partir d'un mécanisme simple recourant par exemple à un actuateur tel qu'un moteur pas-à-pas, un moteur continu, un solénoïde ou un dispositif piézo-électrique.

Comme illustré sur les Figs. 5-7, la première source 10 d'éclairage matriciel est de préférence constituée d'une pluralité de diodes électroluminescentes 15 disposées de façon matricielle sur un support 14 plan. Un tel support 14 peut avantageusement être constitué du circuit imprimé sur lequel les diodes LEDs sont disposées. La disposition matricielle de ces LEDs peut définir aussi bien des bandes verticales d'éclairage 10' (Fig. 1) que des pixels 10" (Fig. 2). Le nombre de LEDs, de bandes verticale d'éclairage 10' ou de pixels 10" demeure indifférent. De préférence encore, la face d'incidence 41 du prisme 40 dioptrique est parallèle au support 14 plan.

De préférence encore, l'optique primaire 17 est constituée d'une matrice de lentilles convergentes 17'. Dans un mode de réalisation préféré, cette optique primaire est agencée au devant du support 14 plan et la face d'incidence 41 du prisme 40 est située dans un plan focal F des lentilles convergentes 17'. De préférence encore ces lentilles convergentes sont toutes identiques et présentent donc toutes des distances focales identiques. Aussi, la matrice de lentilles convergentes 17' de l'optique primaire 17 est de préférence agencée en coïncidence avec la matrice de LEDs de sorte que pour chaque LED est associée une lentille convergente de l'optique primaire. De préférence encore, le plan focal F de l'optique primaire 17 comprend en outre le point focal de l'optique secondaire 18 (lentille de projection).

Comme représenté sur les Figs. 6 et 7, le prisme 40 dioptrique constitue un organe déviateur activable et/ou désactivable. Tel que représenté à la Fig. 4, l'activation ou la désactivation de cet organe déviateur peut, de préférence, être commandée par un signal de commande issu d'un organe de commande 50. Cet organe de commande 50 pourrait être configuré pour prévenir ou détecter la zone d'ombre 5.

Dans un mode de réalisation, l'organe de commande 50 pourrait être un organe de contrôle de l'angle d'inclinaison (site) du mécanisme de correction 30 et pourrait être configuré pour générer et transmettre, à l'organe déviateur (prisme 40), le signal de commande 51 lorsque l'angle d'inclinaison (dans le plan vertical) atteint une valeur de seuil. Cette valeur de seuil pourrait être une valeur prédéfinie correspondant par exemple à un angle présentant une pente (orientée vers le bas) de 2% ou inférieure à cette valeur. L'angle d'inclinaison susmentionné correspond typiquement à l'assiette du véhicule 2 et pourrait être déterminé par le mécanisme de correction 30 et/ou être issu de ce dernier.

Le signal de commande 51 pourrait être un signal binaire ou un signal plus complexe véhiculant au moins une information ou donnée complémentaire.

Dans un mode de réalisation, le signal de commande 51 consiste en :
- un signal d'activation transmis à l'organe déviateur (prisme 40) lorsque l'angle d'inclinaison est supérieur ou égal à la valeur de seuil, et en
- un signal de désactivation transmis à l'organe déviateur lorsque l'angle d'inclinaison est inférieur à cette valeur de seuil.

En variante, le signal de commande pourrait consister en un seul signal d'activation ou de désactivation dans le cas où la position par défaut de l'organe déviateur serait la position de repos R, respectivement la position de travail T.

Dans un mode de réalisation, l'organe de commande 50 est un organe de détection de la zone d'ombre 5. Un tel organe pourrait être une caméra ou un autre organe de type électro-optique notamment.

Dans un autre mode de réalisation, le signal de commande 51 est configuré pour être subordonné à un organe de gestion 60 de l'éclairage matriciel de la première source 10. Par ce biais, il pourrait être possible de désactiver l'organe déviateur (prisme 40) en présence d'une cible située ou détectée au niveau de la zone d'éclairage 3, entre le faisceau lumineux de route 11 et le faisceau lumineux de croisement 12. Une telle cible pourrait être un piéton ou un véhicule venant en sens inverse et qu'il conviendrait de ne pas éblouir pour ne pas gêner son déplacement. L'organe de gestion 60 pourrait être le même organe que celui dédié à la gestion des LEDs de la première source d'éclairage matriciel. Un tel organe de gestion 60 pourrait donc inclure un micro-ordinateur ou au moins un processeur pourvu d'un micro-logiciel.

Dans un second aspect, l'enseignement porte également sur un véhicule 2, en particulier un véhicule automobile, comprenant un projecteur 1 selon l'un quelconque des modes de réalisation de ce projecteur ou selon l'une quelconque combinaison possible de ces modes de réalisation.

Des caractéristiques supplémentaires concernent, dans un premier aspect, un projecteur de véhicule, configuré pour générer une zone d'éclairage au devant du véhicule et comprenant:
- une première source d'éclairage matriciel fixe configurée pour émettre un faisceau lumineux de route,
- une seconde source d'éclairage mobile configurée pour émettre un faisceau lumineux de croisement, et
- un mécanisme de correction configuré pour maintenir une inclinaison verticale constante du faisceau lumineux de croisement par rapport à une ligne horizontale de référence, lorsque le véhicule est en roulage.

De façon préférentielle, l'organe de commande est un organe de contrôle d'un angle d'inclinaison du mécanisme de correction et cet organe est configuré pour générer et transmettre, à l'organe déviateur, ledit signal de commande lorsque ledit angle d'inclinaison atteint une valeur de seuil.

Dans un autre mode de réalisation du premier aspect des caractéristiques supplémentaires, ledit signal de commande est configuré pour être subordonné à un organe de gestion de l'éclairage matriciel de la première source, afin de pouvoir désactiver l'organe déviateur en présence d'une cible située, au niveau de la zone d'éclairage, entre le faisceau lumineux de route et le faisceau lumineux de croisement.

Un second aspect des caractéristiques supplémentaires porte également sur un véhicule, en particulier un véhicule automobile, comprenant un projecteur selon l'un quelconque des modes de réalisation de ce projecteur ou selon l'une quelconque combinaison possible de ces modes de réalisation.

## Revendications

1. [Projecteur (1) de véhicule (2), configuré pour générer une zone d'éclairage (3) au devant du véhicule (2) et comprenant :
- une première source (10) d'éclairage matriciel fixe configurée pour émettre un faisceau lumineux de route (11),
- une seconde source (20) d'éclairage mobile configurée pour émettre un faisceau lumineux de croisement (12), et
- un mécanisme de correction (30) configuré pour maintenir une inclinaison verticale constante du faisceau lumineux de croisement (12) par rapport à une ligne horizontale (H) de référence, lorsque le véhicule est en roulage,
**caractérisé en ce qu'**il comprend en outre un prisme (40) dioptrique configuré pour supprimer au moins une zone d'ombre (5) pouvant survenir, au niveau de ladite zone d'éclairage (3), entre le faisceau lumineux de route (11) et le faisceau lumineux de croisement (12), et **caractérisé en ce que** le prisme (40) dioptrique est monté mobile, au devant de la première source (10) d'éclairage, entre :
- une position de travail (T), permettant de réfracter des rayons incidents (11') du faisceau lumineux de route (11), et
- une position de repos (R), sans effet sur lesdits rayons incidents (11');
et **en ce que** ledit prisme (40) dioptrique comprend :
- une face d'incidence (41) plane, et
- un dioptre (42) plan duquel lesdits rayons incidents (11') émergent du prisme (40) dioptrique en un faisceau réfracté (11") destiné à projeter, au niveau de la zone d'éclairage (3), le faisceau lumineux de route (11) de façon adjacente ou partiellement superposée au faisceau lumineux de croisement (12).

2. Projecteur (1) selon la revendication 1, **caractérisé en ce que** le prisme (40) dioptrique comprend un angle (ϕ), définit par ladite face d'incidence (41) et ledit dioptre (42) plan, configuré pour induire une déviation verticale (δ) desdits rayons incidents (11') comprise entre 1 et 4 degrés.

3. Projecteur (1) selon la revendication 1 ou 2, **caractérisé en ce que** la position de repos (R) est une position escamotée du prisme (40) dioptrique par rapport aux rayons incidents (11').

4. Projecteur (1) selon l'une des revendications 1 à 3, **caractérisé en ce que** le prisme (40) dioptrique est monté mobile en rotation autour d'un axe de rotation (45) situé hors desdits rayons incidents (11').

5. Projecteur (1) selon l'une des revendications 1 à 3, **caractérisé en ce que** le prisme (40) dioptrique est monté mobile en translation le long d'un axe de translation (47).

6. Projecteur (1) selon l'une des revendications 1 à 5, **caractérisé en ce que** la première source (10) d'éclairage est constituée d'une pluralité de diodes électroluminescentes (15) disposées de façon matricielle sur un support (14) plan et **en ce que** la face d'incidence (41) du prisme (40) dioptrique est parallèle audit support (14) plan.

7. Projecteur (1) selon la revendication 6, **caractérisé en ce qu'**une optique primaire (17), constituée d'une matrice de lentilles convergentes (17'), est agencée au devant dudit support (14) plan et **en ce que** la face d'incidence (41) du prisme (40) est située dans un plan focal (F) desdites lentilles convergentes (17').

8. Projecteur (1) selon l'une des revendications précédentes, **caractérisé en ce que** le prisme (40) dioptrique constitue un organe déviateur activable et/ou désactivable par un signal de commande (51) issu d'un organe de commande (50) configuré pour prévenir ou détecter ladite zone d'ombre (5).

9. Véhicule (2), comprenant un projecteur (1) selon l'une des revendications précédentes.

## Patentansprüche

1. Scheinwerfer (1) für ein Fahrzeug (2), der zur Erzeugung eines Beleuchtungsbereichs (3) vor dem Fahrzeug (2) konfiguriert ist und Folgendes umfasst:
- eine erste ortsfeste Matrixlichtquelle (10), die zur Ausstrahlung eines Fernlichtstrahls (11) ausgebildet ist,
- eine zweite bewegliche Lichtquelle (20), die zur Emission eines Abblendlichtstrahls (12) ausgebildet ist, und
- einen Korrekturmechanismus (30), der so gestaltet ist, dass er eine konstante vertikale Neigung des Abblendlichtbündels (12) in Bezug auf eine horizontale Bezugslinie (H) aufrechterhält, wenn das Fahrzeug in Fahrt ist,
es umfasst ferner ein dioptrisches Prisma (40), das so konfiguriert ist, dass es mindestens eine Schattenzone (5) unterdrückt, die in Höhe der Beleuchtungszone (3) zwischen dem Straßenlichtstrahl (11) und dem Abblendlichtstrahl (12) auftreten kann, und **dadurch gekennzeichnet, dass** das dioptrische Prisma (40) beweglich vor der ersten Beleuchtungsquelle (10) zwischen:
- eine Arbeitsstellung (T), in der einfallende Strahlen (11') des Fernlichtbündels (11) brechbar sind, und
- eine Ruhestellung (R), die sich nicht auf die einfallenden Strahlen (11') auswirkt;
und dadurch, dass das dioptrische Prisma (40) umfasst:
- eine ebene Auflagefläche (41) und
- ein planarer Diopter (42), aus dem die einfallenden Strahlen (11') aus dem dioptrischen Prisma (40) in einen gebrechneten Strahl (11") austreten, der dazu bestimmt ist, den Fernlichtstrahl (11) im Bereich des Beleuchtungsbereichs (3) angrenzend oder teilweise überlagert auf den Abblendlichtstrahl (12) zu projizieren.

2. Scheinwerfer (1) nach Anspruch 1, **dadurch gekennzeichnet, dass** das dioptrische Prisma (40) einen Winkel (ϕ) aufweist, der durch die Einfallsfläche (41) und den ebenen Diopter (42) definiert ist und so konfiguriert ist, dass er eine vertikale Ablenkung (δ) der einfallenden Strahlen (11') zwischen 1 und 4 Grad bewirkt.

3. Scheinwerfer (1) nach Anspruch 1 oder 2, **dadurch gekennzeichnet, dass** die Ruhestellung (R) eine versenkte Stellung des dioptrischen Prismas (40) in Bezug auf die einfallenden Strahlen (11') ist.

4. Scheinwerfer (1) nach einem der Ansprüche 1 bis 3, **dadurch gekennzeichnet, dass** das dioptrische Prisma (40) um eine Drehachse (45), die außerhalb der einfallenden Strahlen (11') liegt, drehbar gelagert ist.

5. Scheinwerfer (1) nach einem der Ansprüche 1 bis 3, **dadurch gekennzeichnet, dass** das dioptrische Prisma (40) längs einer Translationsachse (47) verschiebbar gelagert ist.

6. Scheinwerfer (1) nach einem der Ansprüche 1 bis 5, **dadurch gekennzeichnet, dass** die erste Beleuchtungsquelle (10) aus einer Vielzahl von Leuchtdioden (15) besteht, die matrixartig auf einem ebenen Träger (14) angeordnet sind, und dass die Einfallsfläche (41) des dioptrischen Prismas (40) parallel zu dem ebenen Träger (14) verläuft.

7. Projektor (1) nach Anspruch 6, **dadurch gekennzeichnet, dass** eine primäre Optik (17), die aus einer Matrix von konvergierenden Linsen (17') besteht, vor dem ebenen Träger (14) angeordnet ist und dass die Einfallsfläche (41) des Prismas (40) in einer Brennebene (F) der konvergierenden Linsen (17') liegt.

8. Scheinwerfer (1) nach einem der vorhergehenden Ansprüche, **dadurch gekennzeichnet, dass** das dioptrische Prisma (40) ein Ablenkorgan bildet, das durch ein Steuersignal (51) aktivierbar und/oder deaktivierbar ist, das von einem Steuerorgan (50) ausgeht, das so konfiguriert ist, dass es den Schattenbereich (5) verhindert oder erfasst.

9. Fahrzeug (2) mit einem Scheinwerfer (1) nach einem der vorhergehenden Ansprüche.

## Claims

1. A vehicle headlight (1) (2), configured to generate a lighting zone (3) in front of the vehicle (2) and comprising:
- first fixed matrix lighting source (10) configured to emit a driving light beam (11),
- second movable lighting source (20) configured to emit a dipped light beam (12), and
- correction mechanism (30) configured to maintain a constant vertical inclination of the dipped light beam (12) with respect to a reference horizontal line (H), when the vehicle is traveling,
**characterized in that** it further comprises a dioptric prism (40) configured to eliminate at least one shadow zone (5) which may occur, at the level of said lighting zone (3), between the driving light beam (11) and the dioptric light beam (12), and **characterized in that** the dioptric prism (40) is mounted so as to be movable, in front of the first lighting source (10), between:
- working position (T), making it possible to refract incident rays (11' ) of the driving light beam (11), and
- a rest position (R), with no effect on said incident rays (11' );
and **in that** said dioptric prism (40) comprises:
- a plane bearing face (41), and
- a diopter (42) plane of which said incident rays (11 ' ) emerge from the dioptric prism (40) into a refracted beam (11 " ) intended to project, at the level of the lighting zone (3), the driving light beam (11) adjacent or partially superposed on the dipped light beam (12).

2. Headlight (1) according to claim 1, **characterized in that** the dioptric prism (40) comprises an angle (ϕ) defined by said incidence face (41) and said planar diopter (42), configured to induce a vertical deviation (δ) of said incident rays (11') of between 1 and 4 degrees.

3. Projector (1) according to claim 1 or 2, **characterized in that** the rest position (R) is a retracted position of the dioptric prism (40) with respect to the incident rays (11').

4. Headlight (1) according to any one of claims 1 to 3, **characterized in that** the dioptric prism (40) is mounted to be movable in rotation about an axis of rotation (45) situated outside said incident radii (11').

5. Headlight (1) according to any one of claims 1 to 3, **characterized in that** the dioptric prism (40) is mounted so as to be movable in translation along a translation axis (47).

6. Projector (1) according to one of claims 1 to 5, **characterized in that** the first lighting source (10) consists of a plurality of light-emitting diodes (15) arranged in a matrix manner on a plane support (14) and **in that** the incidence face (41) of the dioptric prism (40) is parallel to said plane support (14).

7. Projector (1) according to claim 6, **characterized in that** a primary optic (17), consisting of a matrix of convergent lenses (17'), is arranged in front of the said plane support (14) and **in that** the incidence face (41) of the prism (40) is situated in a focal plane (F) of the said convergent lenses (17').

8. Headlight (1) according to claim 1, wherein the dioptric prism (40) constitutes a deflecting member that can be activated and/or deactivated by a control signal (51) coming from a control member (50) configured to prevent or detect said shadow zone (5).

9. Vehicle (2), comprising a headlight (1) according to one of the preceding claims.
